# EUROPÄISCHE PATENTANMELDUNG

(11) **EP 0 996 084 A2**
(43) Veröffentlichungstag der Anmeldung: **26.04.2000**
(21) Anmeldenummer: 99100641.2
(22) Anmeldetag: 14.01.1999
(51) Int. Cl.: G06K 19/07

(54) **Vorrichtung zum Bedrucken eines Mediums**

(30) Priorität: 22.10.1998 DE 19848779
(71) Anmelder: MOBA-Mobile Automation GmbH, 65604 Elz (DE)
(72) Erfinder: Schmidt, Andreas, 01309 Dresden (DE); Süss, Matthias, 01309 Dresden (DE); Harms, Volker, 65817 Eppstein (DE)
(74) Vertreter: Schoppe, Fritz, Dipl.-Ing.

(57) **Zusammenfassung**

Bei einer Vorrichtung, die zum Bedrucken eines Mediums (110) vorgesehen ist, das eine Sende- und/oder Empfangseinrichtung aufweist, ist ein Druckwerk (102) und eine Schreib- und/oder Lese-Einrichtung (104) vorgesehen. Das Druckwerk bedruckt das Medium (110) abhängig von empfangenen Druckdaten, und die Schreib- und/oder Lese-Einrichtung (104) kommuniziert mit der Sende- und/oder Empfangseinrichtung in dem Medium (110).

## Beschreibung

Die vorliegende Anmeldung bezieht sich auf eine Vorrichtung zum Bedrucken eines Mediums, und insbesondere auf eine Vorrichtung zum Bedrucken eines Mediums, das eine Sende- und/oder Empfangseinrichtung aufweist. Insbesondere bezieht sich die vorliegende Erfindung auf eine Vorrichtung zum Bedrucken eines Etiketts, welches mit einer Transpondereinheit versehen ist.

Im Bereich der Herstellung von bedruckten Medien, insbesondere von Etiketten, sind eine Vielzahl von Druckereinrichtungen bekannt, welche abhängig von vorgegebenen Daten Etiketten erzeugen, welche mit einem von einem Anwender erwünschten Aufdruck bedruckt sind. Bei solchen Druckern wird ein Etikett z. B. in Form einer Rolle einem Druckwerk zugeführt, welches die erwünschten Informationen auf das Etikett aufdruckt. Herkömmlicherweise sind die Etiketten durch ein zweischichtiges Material gebildet, wobei nach dem Bedrucken das Etikett von einer Trägerschicht entfernt werden kann, um auf entsprechende Produkte oder ähnliches aufgeklebt zu werden.

Der Nachteil dieser bekannten Vorrichtungen, welche auch als Labelprinter (Etikettendrucker) bekannt sind, besteht darin, daß durch diese lediglich vorbestimmte Informationen aufgedruckt werden können, die im Klartext erscheinen und keine automatische Erfassung bestimmter Informationen bezüglich des Produkts auf welchem das Etikett angebracht werden soll, in maschinenlesbarer Form enthalten.

Zur Lösung dieses Problems ist im Stand der Technik bekannt, sogenannte Etikettendrucker vorzusehen, welche zusätzlich zu dem Etikettentext einen sogenannten Barcode auf das Etikett aufdrucken, der in codierter und maschinenlesbarer Form Informationen enthält. Der Nachteil dieses bekannten Systems besteht darin, daß nach dem Bedrucken des Etiketts, keinerlei Änderungen hinsichtlich der in dem Barcode gespeicherten Informationen möglich sind, und zusätzlich wird durch ein solches Etikett auch nicht ermöglicht, Informationen auf dem Etikett zu ändern oder weitere Informationen abzuspeichern.

Zur Lösung dieses Problems ist im Stand der Technik bekannt, Etiketten zu verwenden, welche mit einem Transponder versehen sind, der über eine entsprechende Schreib/Lese-Einrichtung beschrieben bzw. ausgelesen werden kann. So beschreibt beispielsweise die EP 564 051 Al eine Identifikationskarte, bei der eine Transpondereinheit in den Kunststoff eingelassen ist, mittels der ein Informationsaustausch zwischen einem Schreib/Lesegerät und dem Chip auf der Karte durchgeführt werden kann. Aus der DE 196 01 358 ist beispielsweise ein Papier bekannt, in welches eine interne Schaltung eingebettet ist, welche über ein entsprechendes Lese/Schreibgerät ausgelesen bzw. beschrieben werden kann.

Der Nachteil dieser aus dem Stand der Technik bekannten Lösungen besteht darin, daß nach dem Bereitstellen des Mediums mit der integrierten Transpondereinheit zunächst das Etikett auf herkömmliche Art und Weise in einem herkömmlichen Drucker, wie er beispielsweise oben beschrieben wurde, bedruckt wird. Nach der Fertigstellung des Etiketts mit dem erwünschten Aufdruck ist es in einem nachfolgenden Schritt erforderlich, die erzeugten Etiketten einer entsprechenden Vorrichtung zuzuführen, die ein Transponder Schreib/Lesegerät aufweist, um entsprechende Daten oder Informationen von dem Etikett zu lesen bzw. in diesem zu speichern.

Somit ist es zunächst erforderlich, die bereits fertiggestellten Etiketten einer weiteren Vorrichtung zuzuführen, was dem Gesamtherstellungsprozeß der Etiketten einen weiteren zeitaufwendigen Schritt hinzufügt. Ferner kann erst zu dem Zeitpunkt, zu dem die Etiketten dem weiteren Gerät zugeführt werden, festgestellt werden, inwieweit die verwendeten Transponder in den einzelnen Etiketten überhaupt funktionstüchtig sind, so daß sich erst dann herausstellt, wieviele Etiketten unter Umständen nachzufertigen sind - und dann erneut dem Lese/Schreibgerät zuzuführen sind.

Ausgehend von diesem Stand der Technik liegt der vorliegenden Erfindung die Aufgabe zugrunde, eine vereinfachte Vorrichtung zum Bedrucken eines Mediums zu schaffen, bei der auf einfache Art und Weise ein in dem Medium vorhandener Transponder mit den erforderlichen Informationen beschrieben werden kann und gleichzeitig festgestellt werden kann, ob der Transponder und damit das herzustellende Etikett überhaupt funktionstüchtig sind.

Diese Aufgabe wird durch eine Vorrichtung gemäß Anspruch 1 gelöst.

Die vorliegende Erfindung schafft eine Vorrichtung zum Bedrucken eines Mediums, das eine Sende- und/oder Empfangseinrichtung aufweist, mit
- einem Druckwerk, das abhängig von empfangenen Druckdaten das Medium bedruckt; und
- einer Schreib- und/oder Lese-Einrichtung, die mit der Sende- und/oder Empfangseinrichtung in dem Medium kommuniziert.

Gegenüber den oben beschriebenen bekannten Etikettendruckern aus dem Stand der Technik hat die vorliegende Erfindung den Vorteil, daß ein einzelnes Gerät geschaffen wird, welches fertige, direkt verwendbare Etiketten ausgibt, die keiner weiteren Bearbeitung bedürfen, um z. B. die erforderlichen Informationen in bzw. aus dem Transponder zu lesen.

Ferner liegt ein Vorteil der vorliegenden Erfindung darin, daß automatisch bestimmt werden kann, ob der Transponder für ein zu erstellendes Etikett funktionstüchtig oder nicht, was auf einfache Art und Weise durch die Vorrichtung erfaßt wird, so daß sichergestellt ist, daß ohne weitere Zwischenhandlungen des Anwenders die korrekte Anzahl von gewünschten Etiketten erzeugt wird.

Gemäß einem bevorzugten Ausführungsbeispiel der vorliegenden Erfindung ist das Schreib/Lesegerät für den Transponder zwischen einem Ausgang des Druckwerks und einer Vorratseinrichtung, die das zu bedruckende Medium enthält, angeordnet, um so zu bestimmen, ob die verwendeten Transponder funktionstüchtig sind.

Ist dies nicht der Fall, so kann z.B. das Druckwerk angesteuert werden, um ein Bedrucken eines nicht funktionstüchtigen Transponderetiketts zu vermeiden. Somit wird auf einfache Art und Weise ermöglicht, funktionstüchtige von nicht-funktionstüchtigen Etiketten zu unterscheiden, und gleichzeitig können Betriebsmittel eingespart werden, was insbesondere bei Tintenstrahldruckern oder Laserdruckern und bei einer hohen Anzahl von zu erzeugenden Etiketten von besonderem Interesse ist, da in diesem Fall vermieden wird, daß unnötig Tinte bzw. Toner verbraucht wird.

Bevorzugte Weiterbildungen der vorliegenden Erfindung sind in den Unteransprüchen definiert.

Nachfolgend wird anhand der beiliegenden Zeichnung ein bevorzugtes Ausführungsbeispiel der vorliegenden Erfindung näher beschrieben. Es zeigt:

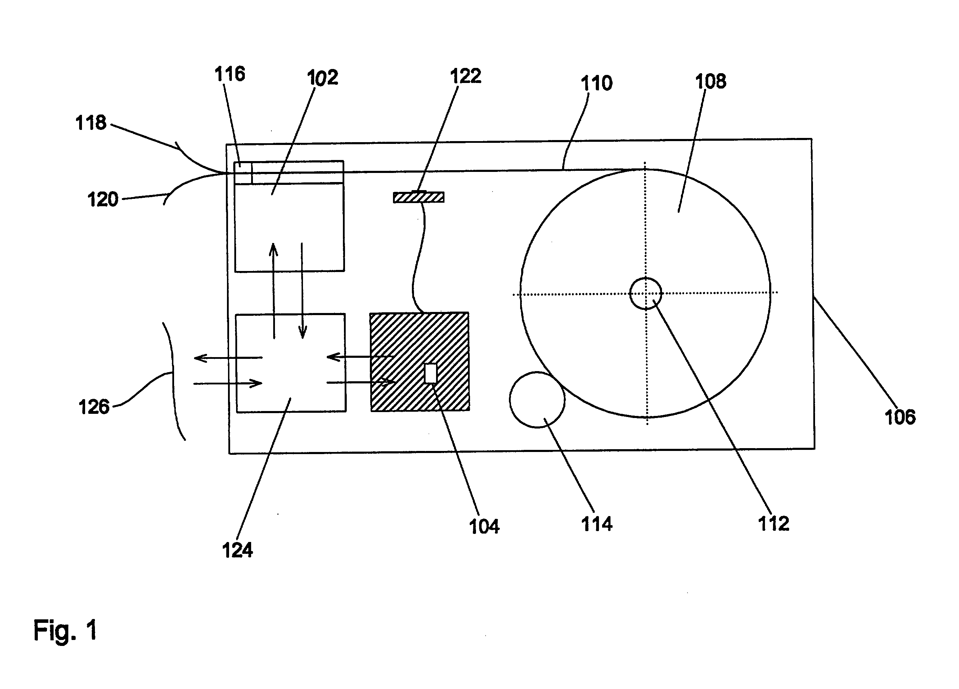

- Fig. 1: eine schematische Darstellung der erfindungsgemäßen Vorrichtung gemäß einem bevorzugten Ausführungsbeispiel.

Fig. 1 zeigt ein Ausführungsbeispiel der erfindungsgemäßen Vorrichtung 100, die ein Druckwerk 102 sowie eine Schreib- und/oder Lese-Einrichtung 104 umfaßt, welche in einem Gehäuse 106 der Vorrichtung 100 angeordnet sind. Ferner ist gemäß dem bevorzugten Ausführungsbeispiel eine Vorratseinrichtung 108 in der Form einer Rolle vorgesehen, auf welcher das zu bedruckende Medium 110 angeordnet ist. Über entsprechende, nur schematisch dargestellte mechanische Lager und Antriebselemente 112, 114 erfolgt die erforderliche Bewegung der Vorratsrolle 108. Wie aus der Figur zu erkennen ist, wird das zu bedruckende Medium 110 von der Vorratsrolle 108 zu dem Druckwerk 102 geführt, dort bedruckt und ausgegeben, wobei dem Druckwerk 102 eine sogenannte Spendeeinrichtung 116 zugeordnet ist, welche bewirkt, daß sich das Medium 110, welches gemäß dem bevorzugten Ausführungsbeispiel zweischichtig ausgebildet ist, in ein Etikett 118 und ein Trägermaterial 120 aufspaltet, wobei in diesem Zusammenhang das Etikett beispielsweise mittels einer Klebeschicht an dem Trägermaterial 120 befestigt ist, und von diesem abgezogen werden kann, um anschließend auf vorbestimmte Produkte oder ähnliches aufgebracht zu werden. Das Medium 110 weist eine Sende- und/oder Empfangseinrichtung auf, welche in der Figur nicht dargestellt ist, und bei der es sich beispielsweise um eine in die Etikettenschicht eingebettete Transpondereinheit handelt. Die Schreib- und/oder Lese-Einrichtung 104 der erfindungsgemäßen Vorrichtung 100 kommuniziert mit der Sende- und/oder Empfangseinrichtung (Transponder) in dem Medium 110.

Gemäß der vorliegenden Erfindung ist z.B. eine Antenne 122 der Sende- und/oder Empfangseinrichtung 104 zwischen einem Ausgang des Druckwerks 102, an dem z.B. die Spendeeinrichtung 116 angeordnet ist, und der Vorratsrolle 108 angeordnet.

Bei dem in Fig. 1 dargestellten Ausführungsbeispiel ist die Antenne 122 benachbart zu dem Medium 110 angeordnet, um so die entsprechende Kommunikation zwischen Antenne 122 und dem Transponder in dem Medium 110 zu gewährleisten. Die Antenne 122 ist zwischen dem Vorratsbehälter 108 und dem Druckwerk 102 angeordnet, um so zu gewährleisten, daß bereits vor dem Bedrucken des Mediums 110 festgestellt werden kann, ob der darin eingebettete Transponder funktionstüchtig ist, wobei abhängig von dem Ergebnis der Erfassung ein Bedrucken des Mediums 110 erfolgt oder nicht.

Gemäß einem weiteren, nicht dargestellten Ausführungsbeispiel der vorliegenden Erfindung ist die Antenne 122 zwischen dem Ausgang des Druckwerks 102 und einem Druckkopf des Druckwerks 102 angeordnet, z.B. zwischen der Spendeeinrichtung 118 und dem Druckkopf des Druckwerks 102. Diese Anordnung hat den Vorteil, daß bei einem Etiketteneinzeldruck keine Fehlsstellen, also ausgelassene Etiketten, entstehen. Das Druckwerk 102 ist dennoch in der Lage, einen defekten Transponder in dem Medium mit einer entsprechenden Anschrift zu bedrucken, da das Medium zurückgezogen werden kann, solange das Etikett nicht vollständig von dem Träger gelöst ist. Durch eine entsprechende, genaue Abstimmung der Druckersteuerung und des Schreib- und/oder Lesegeräts wird dieser Vorgang gesteuert.

Neben den oben beschriebenen Elementen weist die Vorrichtung 100 ferner eine Druckersteuerung 124 auf, welche bei dem dargestellten Ausführungsbeispiel sowohl mit dem Druckwerk 102 als auch mit der Schreib- und/oder Lese-Einrichtung 104 in Verbindung steht, wie dies durch die entsprechenden Pfeile zwischen den Elementen 102, 104 und 124 angedeutet ist. Über diese Schnittstellen erfolgt ein Datenaustausch zwischen der Druckersteuerung 124 und dem Druckwerk 102 und zwischen der Druckersteuerung 124 und der Einrichtung 104, welche bei dem dargestellten Ausführungsbeispiel einen Informationsfluß in zwei Richtungen ermöglicht, wobei jedoch abhängig von der erwünschten Konfiguration es auch ausreichend sein kann, lediglich einen Datenaustausch in eine Richtung zuzulassen.

Die Druckersteuerung 124 umfaßt ferner eine Druckerdatenschnittstelle 126, welche Daten empfängt und/oder sendet, wobei über die Schnittstelle 126 und die Druckersteuerung 124 Druckdaten empfangen werden, die an das Druckwerk weitergeleitet werden, welches abhängig von den empfangenen Druckdaten das Medium bedruckt.

Neben dem Empfang der Druckdaten können über die Druckerdatenschnittstelle 126 auch die erforderlichen Daten zwischen einem Hauptgerät und der Einrichtung 104 ausgetauscht werden.

Bei einem weiteren, nicht dargestellten Ausführungsbeispiel kann anstelle der gemeinsamen Schnittstelle 126 eine weitere Schnittstelle vorgesehen sein, welche der Einrichtung 104 zugeordnet ist, und die direkt mit einem externen Gerät in Verbindung steht, so daß in diesem Fall über die Schnittstelle 126 nur Daten bezüglich der Druckersteuerung laufen, und die erforderlichen Daten bzw. der Datenaustausch zwischen der Einrichtung 104 und einer externen Einrichtung über die der Einrichtung 104 zugeordnete Schnittstelle erfolgt.

Über die Schnittstellen, unabhängig davon ob nur eine oder mehrere Schnittstellen vorgesehen sind, erfolgt der erforderliche Datenaustausch zwischen einem externen Gerät und der erfindungsgemäßen Vorrichtung, wobei zum einen die erforderlichen Druckdaten zum Bedrucken des Etiketts dem Druckwerk 102 über die Schnittstellen zugeführt werden, und zum anderen beispielsweise die erforderlichen Daten, welche in den Transponder eingelesen werden sollen, empfangen werden. Ebenso werden beispielsweise bestimmte Fehlersignale oder andere Steuersignale von der Vorrichtung 100 empfangen oder an diese ausgegeben, so daß beispielsweise durch die Ausgabe eines entsprechenden Signals dem externen Gerät angezeigt werden kann, wieviele fehlerhafte Transponder vorhanden waren, und gleichzeitig in diesem Zusammenhang die Gesamtzahl der fehlerfreien Etiketten angezeigt werden kann.

Hinsichtlich des Mediums 110 wird darauf hingewiesen, daß die in Fig. 1 dargestellte Darstellung lediglich schematischer Natur ist, und daß das Medium 110 in der Form eines Endlosbandes angeordnet ist, wobei das Medium 110 in Abschnitte unterteilt ist, welche ein Etikett definieren, und diese Abschnitte sind jeweils mit einem eingebetteten Transponder versehen.

Die Antenne 122 kann beispielsweise als separates Bauteil in der Bandführung angeordnet sein, welche das Medium 110 von der Rolle 108 zum Druckwerk 102 führt. Die Antennenfläche der Antenne 122 ist derart gewählt, daß sie die Abmessungen des in dem Medium 110 eingebetteten Transponders hat, oder ist sogar kleiner ausgeführt, so daß während eines Schreibvorgangs die erforderliche eindeutige Zuordnung von Antenne zu Transponder gegeben ist.

Wie es bereits oben beschrieben wurde, wird es bevorzugt, die Antenne 122 vor dem Druckwerk 102 anzuordnen, um somit eine Qualitätskontrolle des Transponderetiketts vor dem Ausdruck bereitzustellen. Defekte Etiketten können beispielsweise mit einem entsprechenden Ausdruck gekennzeichnet werden, oder auch überhaupt nicht bedruckt werden.

Um einen ordnungsgemäßen Betrieb sicherzustellen, muß das Transponderetikett während des Codiervorgangs einzeln im Wirkungsbereich der Antenne vorliegen, und für den Fall, daß eine solche Antennenordnung aufgrund geringen Bauraumes in der Bandführung nicht möglich ist, kann mit entsprechenden Abschirmmaßnahmen eine solche Vereinzelung sichergestellt werden.

Gemäß der vorliegenden Erfindung kann die Elektronik bezüglich des Transponder-Lese/Schreibgeräts 104, 122 im einfachsten Fall als Einplatinenlösung realisiert werden, wobei die erforderliche Stromversorgung durch die in dem Drucker vorhandene Stromversorgung bereitgestellt wird.

Bei einem weiteren bevorzugten Ausführungsbeispiel ist die Antenne 122 als flexibles, flaches Bauteil ausgeführt, um deren Integration auch an gekrümmten Bandführungen zu ermöglichen.

Die Daten zum Beschreiben (Codieren) des Transponders können über die übliche Druckerschnittstelle 126 von einem Hauptrechner (PC) in die Druckvorrichtung eingelesen werden, und die Druckersteuerung 124 gibt diese Daten an die Einrichtung 104 weiter. Da die Daten zum Codieren des Transponders nicht zwangsläufig gedruckt werden, wird gemäß einem weiteren Ausführungsbeispiel die ESC-Sequenz (ESC = ESCAPE) von Protokollen der Druckertreiber erweitert, um eine Selektion von zu druckenden und zu codierenden Daten vornehmen zu können.

Für den oben beschriebenen Fall, daß die Druckersteuerung 124 die Verteilung von Druckdaten und Daten für den Transponder nicht übernimmt, kann das Transponder-Lese/Schreib-Gerät derart ausgestaltet sein, daß es in der Lage ist, die erforderlichen Daten selbst aus dem Datenstrom der Druckerschnittstelle 126 herauszufiltern.

## Patentansprüche

1. Vorrichtung zum Bedrucken eines Mediums (110), das eine Sende- und/oder Empfangseinrichtung aufweist, mit
- einem Druckwerk (102), das abhängig von empfangenen Druckdaten das Medium (110) bedruckt; und
- einer Schreib- und/oder Lese-Einrichtung (104), die mit der Sende- und/oder Empfangseinrichtung in dem Medium (110) kommuniziert.

2. Vorrichtung nach Anspruch 1, mit
- einer Vorratseinrichtung (108) für das Medium (110); und
- einer Schnittstelle (126) zum Empfangen und Senden von Daten.

3. Vorrichtung nach Anspruch 1 oder 2, bei der die Schreib- und/oder Lese-Einrichtung (104) zwischen dem Druckwerk (102) und der Vorratseinrichtung (108) angeordnet ist.

4. Vorrichtung nach Anspruch 1 oder 2, bei der die Schreib- und/oder Lese-Einrichtung (104) zwischen einem Ausgang des Druckwerks (102) und dem Druckwerk (102) angeordnet ist.

5. Vorrichtung nach einem der Ansprüche 2 bis 4, bei der die Schnittstelle (126) Daten für und Daten von dem Druckwerk (102) sowie Daten für und Daten von der Schreib- und/oder Lese-Einrichtung (104) empfängt und/oder sendet.

6. Vorrichtung nach einem der Ansprüche 2 bis 4, bei der die Schnittstelle Druckdaten für und Daten von dem Druckwerk (102) empfängt und sendet, wobei die Schreib- und/oder Lese-Einrichtung (104) eine weitere Schnittstelle zum Empfangen und Senden von Daten für und von der Schreib- und/oder Lese-Einrichtung (104) umfaßt.

7. Vorrichtung nach einem der Ansprüche 1 bis 6, bei der die Schreib- und/oder Lese-Einrichtung (104) eine Antenne (122) umfaßt, die benachbart zu dem Medium (110) angeordnet ist.

8. Vorrichtung nach einem der Ansprüche 1 bis 7, bei dem das Medium (110) durch zwei Schichten (118, 120) gebildet ist, die trennbar miteinander verbunden sind, wobei die erste Schicht eine bedruckbare Oberfläche und einen Transponder umfaßt, und wobei die zweite Schicht ein Trägermaterial umfaßt.
